# EUROPEAN PATENT SPECIFICATION

(11) **EP 2 230 015 B1**
(45) Date of publication and mention of the grant of the patent: **05.06.2013**
(21) Application number: 10153245.5
(22) Date of filing: 11.02.2010
(51) Int. Cl.: B01L 3/00, F16L 37/00, F16L 39/00

(54) **Tube connection component and microfluidic system including the same**
Schlauchanschlusskomponente und mikrofluidisches System damit
Composant de raccordement de tuyau et système microfluidique l'incluant

(30) Priority: 13.03.2009 KR 20090021861
(43) Date of publication of application: 22.09.2010
(73) Proprietor: Samsung Electronics Co., Ltd., Suwon-si, Gyeonggi-do, 443-742 (KR)
(72) Inventor: Park, Chin-sung, Gyeonggi-do (KR); Sim, Tae-seok, Gyeonggi-do (KR)
(74) Representative: Grünecker, Kinkeldey, Stockmair & Schwanhäusser

(56) References cited:
- US-A1- 2004 080 744
- US-A1- 2005 118 068
- US-B1- 7 311 882
- US-B1- 7 553 455

## Description

### BACKGROUND

### 1. Field

One or more embodiments relate to a tube connection component used to connect a tube to a microfluidic device, and a microfluidic system including the tube connection component.

### 2. Description of the Related Art

In the field of microfluidics, research into a microfluidic device capable of performing various functions, such as performing biochemical reactions, detecting a result of the reactions, etc., using biochemical samples is being actively conducted. The typical microfluidic device may be a device in the form of a chip, also referred to as a lab-on-a-chip, or a device in the form of a rotating disk, also referred to as a lab-on-a-disk. The typical microfluidic device may include a chamber in which fluids are accommodated, a channel through which fluids are transferred, a valve controlling fluid flow, and various functional units performing selected functions using fluids.

In order to inject fluids into a microfluidic device, or to eject fluids out of the microfluidic device, a tube may be connected to an inlet hole or outlet hole of the microfluidic device. A connection portion between the tube and the microfluidic device needs to be closely sealed to prevent undesirable leakage of fluids. Simultaneously, the tube needs to be easily attached to the connection portion of the microfluidic device. In addition, along with the development of small-sized and compact microfluidic devices, there is a need to miniaturize such connection components.

### SUMMARY

Document US 2005/0118068 is directed to a microfluid system which comprises a flow-through volume and a connection means connected to the volume and configured in the form of a tapered recess or a tapered elevation. Plug means configured in the form of a conical taper in plugging direction can be connected to the microfluid system. The plug means comprises a through hole to which a flexible tube is connected.

Document US 2004/0080744 deals with a flow cell for optical analysis of a fluid. An optical detection flow cell is disclosed which comprises fluid inlet ports and fluid outlet ports. When the flow cell is pressed against a microfluidic device, an O-ring is compressed, forming the desired seal. A central protrusion acts to retain the O-ring.

### SUMMARY

The invention provides a microfluidic system according to claim 1.

One or more embodiments include a tube connection component used to connect a tube to a small-sized and compact microfluidic device.

One or more embodiments include a tube connection component having a smaller dead volume than that of a structure in which an o-ring is used to connect a tube to a microfluidic device, and a microfluidic system including the tube connection component.

Additional aspects will be set forth in part in the description which follows and, in part, will be apparent from the description, or may be learned by practice of the presented embodiments.

One or more embodiments may include a tube connection component including; a body defining a through hole in fluid communication with an end of a tube, wherein the body connects a tapered fluid communication hole of a microfluidic device to the end of the tube, and a tapered protrusion which protrudes from the body and is accommodated in the tapered fluid communication hole when the body is fixed to the microfluidic device.

In one embodiment, an inclination angle of the tapered protrusion may be less than an inclination angle of the tapered fluid communication hole when the body is not fixed to the microfluidic device.

In one embodiment, the inclination angle of the protrusion may be in the range of about 1 degree to about 45 degrees.

In one embodiment, the inclination angle of the inlet hole or outlet hole may be in the range of about 4 degrees to about 55 degrees.

In one embodiment, the tube connection component may further include a connection element fixing the body to the microfluidic device.

In one embodiment, the tube connection component is selected from the group consisting of polypropylene ("PP"), polycarbonate ("PC"), polyethylene ("PE"), an acrylic resin and a combination thereof.

One or more embodiments may include a tube connection component including; a body defining a through hole fluid communication with an end of a tube, wherein the body connects a fluid communication hole of a microfluidic device to the end of the tube, and a gasket portion disposed surrounding the through hole on a side of the body which is disposed substantially opposite a side of the body in which the end of the tube is inserted so that the gasket portion is disposed adjacent to the fluid communication hole when the body is fixed to the microfluidic device.

In one embodiment, the tube connection component may further include a connection element which fixes the body to the microfluidic device.

In one embodiment, the tube connection component may have an o-ring shape.

In one embodiment, the tube connection component may include a gasket unit including the gasket portion and a first body portion integrally formed with the gasket portion as a single, unitary and indivisible component and wherein the first body portion defines a first connection through hole therein, and a tube receiving unit including a second body portion defining a second connection through hole therein, wherein the through hole includes the first connection thorough hole and the second connection through hole in a linearly aligned arrangement, and wherein the body includes the first body portion and the second body portion coupled to each other.

In one embodiment, the tube receiving unit may include a tapered protrusion which protrudes from the second body portion towards the first connection through hole, and wherein the first connection through hole may be tapered to accommodate the tapered protrusion.

In one embodiment, an inclination angle of the protrusion may be less than an inclination angle of the first connection through hole when the second body portion is not coupled to the first body portion.

In one embodiment, the inclination angle of the tapered protrusion may be in the range of about 1 degree to about 45 degrees.

In one embodiment, the inclination angle of the first connection through hole may be in the range of about 4 degrees to about 55 degrees.

In one embodiment, the tube connection component may be selected from the group consisting of a silicone, polydimethylsiloxane ("PDMS"), rubber and a combination thereof.

In one embodiment, the microfluidic system may further include a sealant portion which seals the end of the tube and the through hole.

### BRIEF DESCRIPTION OF THE DRAWINGS

These and/or other aspects will become apparent and more readily appreciated from the following description of the embodiments, taken in conjunction with the accompanying drawings of which:

FIG. 1 is an exploded perspective view of an embodiment of a microfluidic system;

FIG. 2A is a cross-sectional view of the embodiment of a microfluidic system of FIG. 1 in a state in which a tube connection component and a microfluidic device are not assembled;

FIG. 2B is a cross-sectional view of the embodiment of a microfluidic system of FIG. 1 in a state in which the tube connection component and the microfluidic device are assembled;

FIG. 3 is an exploded perspective view of another embodiment of a microfluidic system;

FIG. 4 is a cross-sectional view of the embodiment of a microfluidic system of FIG. 3 in a state in which a tube connection component and a microfluidic device are assembled; and

FIG. 5 is a cross-sectional view of another embodiment of a tube connection component.

### DETAILED DESCRIPTION

Embodiments now will be described more fully hereinafter with reference to the accompanying drawings, in which embodiments are shown. These embodiments may, however, be embodied in many different forms and should not be construed as limited to the embodiments set forth herein. Rather, these embodiments are provided so that this disclosure will be thorough and complete, and will fully convey the scope of the disclosure to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the disclosure.

All methods described herein can be performed in a suitable order unless otherwise indicated herein or otherwise clearly contradicted by context. The use of any and all examples, or exemplary language (e.g., "such as"), is intended merely to better illustrate the disclosure and does not pose a limitation on the scope thereof unless otherwise claimed. No language in the specification should be construed as indicating any non-claimed element as essential to the practice of the embodiments as used herein.

Hereinafter, the embodiments will be described in detail with reference to the accompanying drawings.

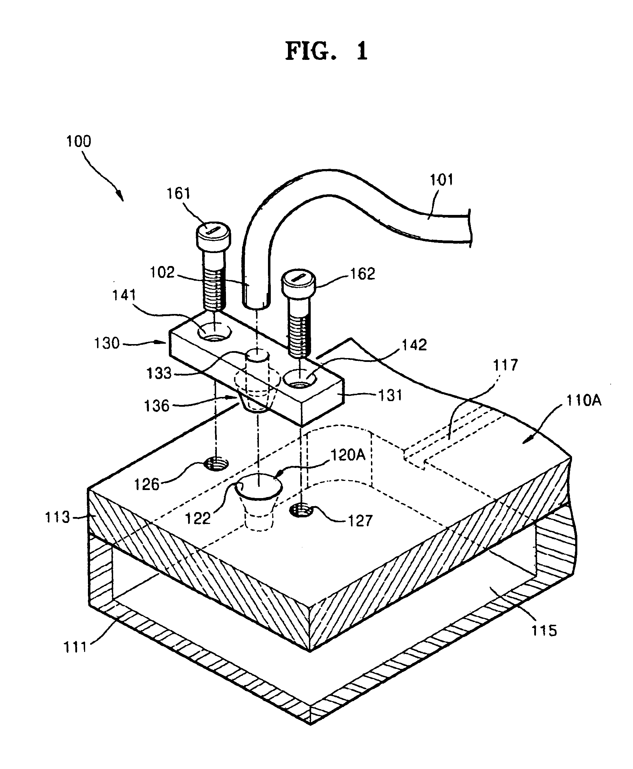

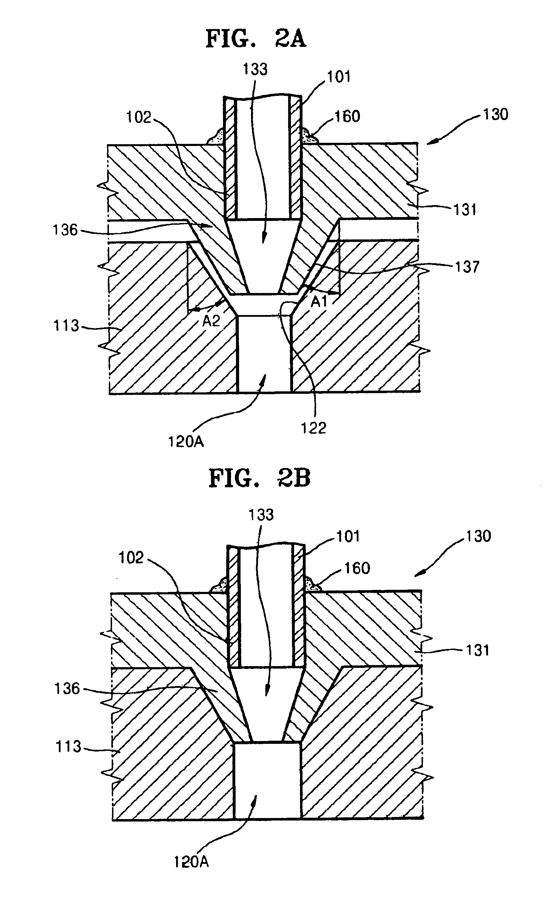

FIG. 1 is an exploded perspective view of an embodiment of a microfluidic system 100. FIG. 2A is a cross-sectional view of the embodiment of a microfluidic system 100 of FIG. 1 in a state in which a tube connection component 130 and a microfluidic device 110A are not assembled. FIG. 2B is a cross-sectional view of the embodiment of a microfluidic system 100 of FIG. 1 in a state in which the tube connection component 130 and the microfluidic device 110A are assembled.

Referring to FIG. 1, the present embodiment of a microfluidic system 100 includes the microfluidic device 110A that includes an inlet hole 120A through which biochemical fluids are injected, a tube 101 connected to the inlet hole 120A so that fluids may flow through the tube 101 and into the microfluidic device 110A via the inlet hole 120A, and the tube connection component 130 that connects an end 102 of the tube 101 to the inlet hole 120A. The inlet hole 120A is a fluid communication hole of the microfluidic system, wherein the term fluid communication hole may also refer to an outlet hole of the microfluidic system. In the present embodiment, the microfluidic device 110A is manufactured by adhering a lower substrate 111 to an upper substrate 113, although alternative embodiments include alternative configurations, such as when the microfluidic device 110A is manufactured as a single, solitary and indivisible unit and embodiments wherein the microfluidic device 110A is manufactured using additional components in addition to the lower substrate 111 and the upper substrate 113.

In the microfluidic device 110A, a chamber 115 in which fluids are accommodated and a channel 117 through which fluids are transferred are both formed by forming a groove in an upper surface of the lower substrate 111, which is adhered to the upper substrate 113. In addition to the chamber 115 and the channel 117, embodiments of the microfluidic device 110A may include a valve (not shown) which controls fluid flow therethrough. In one embodiment, the inlet hole 120A may be formed through the upper substrate 113 by mechanical processing, although alternative embodiments include alternative methods of forming the inlet hole 120A such as etching or laser ablation. Fluids are injected into the chamber 115 through the inlet hole 120A. Although not illustrated, the microfluidic device 110A may further include an outlet hole through which fluids are ejected from the microfluidic device 110A, and the outlet hole may be connected to another tube so that fluids may flow through the outlet hole and the another tube, thereby exiting the microfluidic device 110A. In such embodiments, the outlet hole and tube arrangement may be similar to that described herein with respect to the inlet hole 120A and tube 101 arrangement.

In the present embodiment, the inlet hole 120A is tapered in a funnel shape. Referring to FIGS. 1 and 2A, the inlet hole 120A includes an inlet hole inclined plane 122 whose diameter decreases towards an inner surface of the upper substrate 113 from an outer surface of the upper substrate 113, e.g., the inlet hole 120A has a shape of a frustum. Embodiments of an inlet hole inclination angle A2 between the inlet hole inclined plane 122 and a normal line extending in a thickness direction of the upper substrate 113 may be in the range of about 4 degrees to about 55 degrees.

Referring back to FIG. 1, in the present embodiment the tube 101 is flexible, and provides a flow channel through which fluids flow to the microfluidic device 110A. Although not illustrated, the end of the tube 101 which is not connected to the microfluidic device 110A may be connected to a fluid reservoir.

Referring to FIGS. 1 and 2A, the tube connection component 130 includes a body 131 which may be fixed to the microfluidic device 110A, e.g., the body 131 may be constrained to be immediately adjacent to the microfluidic device 110A, and a tapered protrusion 136 protruding from the body 131 so as to be accommodated in the inlet hole 120A when the body 131 is fixed to the microfluidic device 110A. In one embodiment, the body 131 and the protrusion 136 may be integrally formed together as a single, unitary and indivisible component by molding a polymer resin, although alternative embodiments include alternative methods of forming the body 131 and the protrusion 136. In one embodiment, the tube connection component 130 may be formed of a material including polypropylene ("PP"), polycarbonate ("PC"), polyethylene ("PE"), an acrylic resin or another material having similar characteristics.

The body 131 includes a through hole 133 formed in a thickness direction of the body 131. In the present embodiment, the end 102 of the tube 101 is inserted into the through hole 133. In the present embodiment, the through hole 133 linearly connects the end 102 of the tube 101 and the inlet hole 120A so that fluids may flow into the microfluidic device 110A through the tube 101 and the inlet hole 120A. The linear connection includes advantages such as a relatively fast flow rate and simple construction. Alternative embodiments include configurations wherein the through hole 133 may have a non-linear shape, e.g., a serpentine shape, which may be used to mix incoming fluids prior to injection into the inlet hole 120A. The diameter of the through hole 133 may be equal to or less than an external diameter of the end 102 of the tube 101 so that the end 102 of the tube 101 is closely adhered to an inner circumference surface of the through hole 133. A sealant portion 160 sealing an inlet of the through hole 133 is formed by coating a sealant around the inlet of the through hole 133 so that fluids do not leak between the end 102 of the tube 101 and the through hole 133.

The tapered protrusion 136 includes a protrusion inclined plane 137 whose diameter decreases away from the body 131, e.g., in one embodiment the tapered protrusion 136 may also be a frustum and may have a shape corresponding to the shape of the inlet hole 120A. Embodiments of a protrusion inclination angle A1 between the protrusion inclined plane 137 and a normal line extending in a thickness direction of the body 131 may be in the range of about 1 degree to about 45 degrees. When the body 131 is not fixed to the microfluidic device 110A, the protrusion inclination angle A1 is less than the inlet hole inclination angle A2, that is, in a state where the tube connection component 130 is not installed on the microfluidic device 110A, the angle A1 is less than the inlet hole inclination angle A2, e.g., the tapered protrusion 136 is slightly larger than the inlet hole 120A.

Referring to FIG. 2B, the protrusion 136 is elastically deformed so that the protrusion inclination angle A1 is substantially equal to the inlet hole inclination angle A2 by aligning the protrusion 136 and the inlet hole 120A with each other so that the protrusion 136 is accommodated in the inlet hole 120A and then compressing the tube connection component 130 towards the upper substrate 113. Thus, the inlet hole inclined plane 122 is closely adhered to the protrusion inclined plane 137, thereby reliably preventing fluids from leaking from the connections therebetween. Since the tube connection component 130 includes the protrusion 136 integrally formed with the body 131, a dead volume of the microfluidic device 110A may be less than that of a general microfluidic device having a tube connection structure including a connection member (not shown) coupled to the end 102 of the tube 101 for sealing and an o-ring interposed between the connection member and the microfluidic device. As used herein, the dead volume refers to a volume of a portion of the microfluidic device 110A, which does not materially contribute to a biochemical test performed in the microfluidic device 110A. Since most samples used in a biochemical test are expensive liquids, the dead volume may be reduced in order to reduce a biochemical test cost.

The tube connection component 130 further includes a connection element fixing the body 131 to the microfluidic device 110A. In one embodiment, the connection element may include bolts 161 and 162. Bolt through holes 141 and 142 through which the bolts 161 and 162 may pass may be formed in the body 131, and bolt connecting holes 126 and 127 through which the bolts 161 and 162 may pass after passing through the through holes 141 and 142 may be formed in the upper substrate 113. The body 131 may be fixed to the microfluidic device 110A by rotating the bolts 161 and 162 in a selected direction with respect to the bolt through holes 141 and 142 and the bolt connecting holes 126 and 127. Conversely, the body 131 may be separated from the microfluidic device 110A by rotating the bolts 161 and 162 in an opposite direction from the selected direction. Alternative embodiments include alternative configurations for securing the body 131 to the microfluidic device 110A, e.g., screws, adhesives, clips, nails, suction cups and various other assorted fasteners.

Although an embodiment of a connection element including bolts is illustrated in FIG. 1, alternative embodiments of a connection element include, for example, a hook capable of being received by a hook receiving groove, double-sided adhesive tape, and adhesive may be used. In addition, although an embodiment of a tube connection component 130 including a single through hole 133 and a single protrusion 136 is illustrated in FIG. 1, alternative embodiments include configurations wherein a tube connection component including a plurality of through holes and a plurality of protrusions may be used.

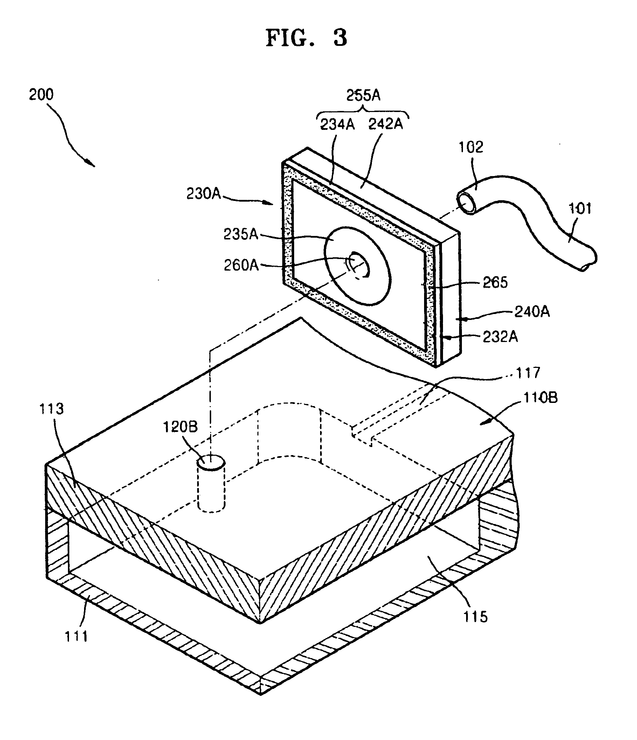

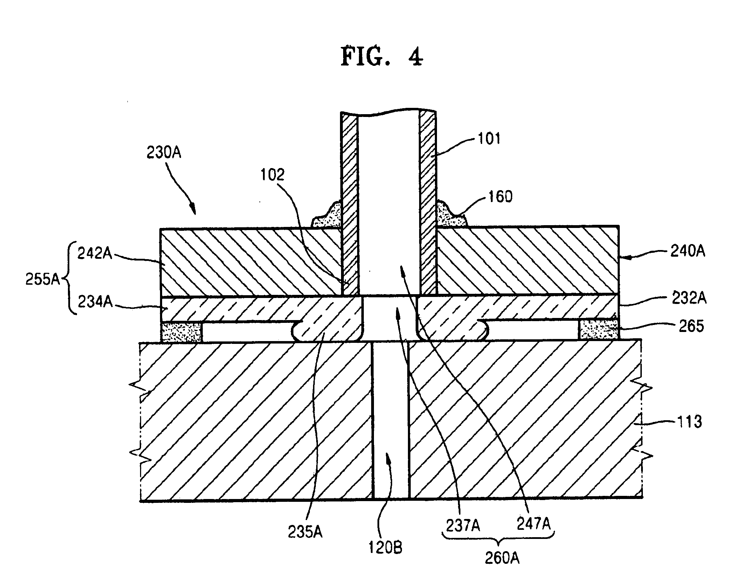

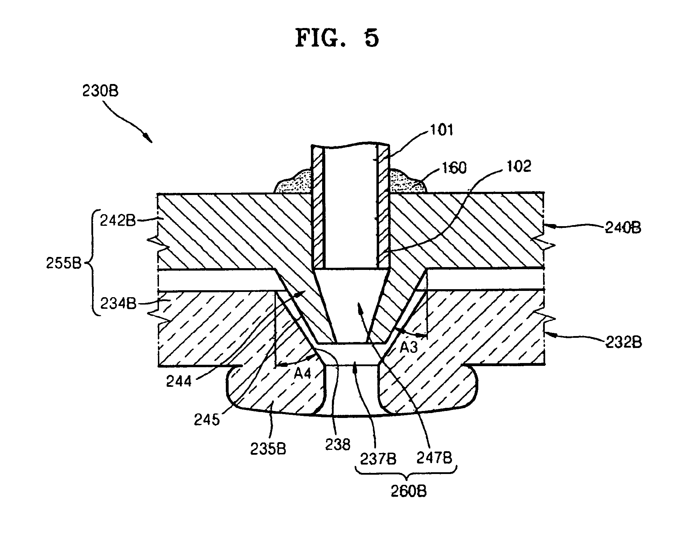

FIG. 3 is an exploded perspective view of another embodiment of a microfluidic system 200. FIG. 4 is a cross-sectional view of the embodiment of a microfluidic system 200 of FIG. 3 in a state in which a tube connection component 230A and a microfluidic device 110B are assembled. FIG. 5 is a cross-sectional view of another embodiment of a tube connection component 230B. Hereinafter, descriptions of elements with the same reference numerals as in FIGS. 2A and 2B will not be repeated, and thus the microfluidic system 200 of FIGS. 3 and 4 will be described in terms of new elements included therein.

Referring to FIG. 3, the present embodiment of a microfluidic system 200 includes the microfluidic device 110B including an inlet hole 120B through which biochemical fluids are injected, a tube 101 connected to the inlet hole 120B so that fluids may flow into the microfluidic device 110B through the tube 101 and the inlet hole 120B, and the tube connection component 230A connecting an end 102 of the tube 101 to the inlet hole 120B. In the present embodiment, the microfluidic device 110B is manufactured by adhering a lower substrate 111 to an upper substrate 113, and includes a chamber 115 in which fluids are accommodated, and a channel 117 through which fluids are transferred. Similar to the embodiment discussed above, alternative embodiments of the microfluidic device 110B include alternative methods of manufacturing the same, e.g., the microfluidic device 110B may be formed as a single, solitary and indivisible component or may be formed from a plurality of individual components. In addition, in one embodiment the microfluidic device 110B may include a valve (not shown) controlling fluid flow therethrough. Fluids are injected into the chamber 115 through the inlet hole 120B. Although not illustrated, embodiments of the microfluidic device 110B may further include an outlet hole through which fluids are ejected from the microfluidic device 110B, and the outlet hole may be connected to another tube so that fluids may flow through the outlet hole and another tube. In such embodiments, the outlet hole and tube arrangement may be similar to that described herein with respect to the inlet hole 120B and tube 101 arrangement.

Referring to FIGS. 3 and 4, the tube connection component 230A includes a body 255A fixed to the microfluidic device 110B, and a gasket portion 235A disposed at a side of the body 255A that faces the microfluidic device 110B. The body 255A includes a through hole 260A formed in a thickness direction of the body 255A. The gasket portion 235A is disposed around an inlet of the side of the through hole 260A that faces the microfludic device 110B.

The end 102 of the tube 101 is inserted into the through hole 260A. In the present embodiment, the through hole 260A linearly connects the end 102 of the tube 101 and the inlet hole 120B so that fluids may flow into the microfluidic device 110B through the tube 101 and the inlet hole 120B. The diameter of the through hole 260A may be equal to or less than an external diameter of the end 102 of the tube 101 so that the end 102 of the tube 101 is closely adhered to an inner circumference surface of the through hole 260A. A sealant portion 160 sealing an inlet of the through hole 260A is formed by coating a sealant around the inlet of the through hole 260A so that fluids do not leak between the end 102 of the tube 101 and the through hole 260A. Alternative embodiments may include alternative methods of sealing the inlet of the through hole 260A.

In the present embodiment, the tube connection component 230A is formed by coupling a pair of members that are separately formed. Specifically, the tube connection component 230A includes a gasket unit 232A and a tube receiving unit 240A. In the present embodiment, the gasket unit 232A includes the gasket portion 235A and a first body portion 234A integrally formed with the gasket portion 235A and including a first connection through hole 237A. The tube receiving unit 240A includes a second body portion 242A including a second connection through hole 247A. In one embodiment, the tube connection component 230A may be formed by linearly aligning the first connection through hole 237A and the second connection through hole 247A and then coupling the first body portion 234A and the second body portion 242A to each other. In one embodiment, the first body portion 234A and the second body portion 242A may be coupled to each other by an adhesive, but the coupling is not limited thereto.

The through hole 260A is formed by the first connection through hole 237A and the second connection through hole 247A which, in the present embodiment are connected in a line. The body 255A is formed by coupling the first body portion 234A and the second body portion 242A to each other. In the present embodiment, the first body portion 234A and the gasket portion 235A are integrally formed with each other as a single, indivisible and unitary component. Embodiments include configurations wherein the gasket unit 232A and the tube receiving unit 240A may each be formed by molding a polymer resin, and then may be integrally formed with each other. Embodiments of the gasket unit 232A may be formed of a material including a silicone, polydimethylsiloxane ("PDMS"), rubber or other material having similar characteristics. The tube receiving unit 240A may be formed of a material including PP, PC, PE, an acrylic resin or other material with similar characteristics.

The gasket portion 235A is elastically deformed so as to be closely adhered to the upper substrate 113 by linearly aligning the through hole 260A and the inlet hole 120B and then compressing the tube connection component 230A towards the upper substrate 113. The gasket portion 235A surrounds an inlet of the inlet hole 120B, thereby reliably preventing fluids from leaking. Since the tube connection component 230A includes the gasket portion 235A protruding from the body 255A, a dead volume of the microfluidic device 110B may be less than that of a general microfluidic device of a tube connection structure including a connection member (not shown) coupled to the end 102 of the tube 101 for sealing and an o-ring interposed between the connection member and the microfluidic device.

Embodiments include configurations wherein the tube connection component 230A further includes a connection element connecting the body 255A to the microfluidic device 110B. In one embodiment, the connection element may include double-sided adhesive tape 265 attached to a side surface of the body 255A, which faces the microfluidic device 110B. The double-sided adhesive tape 265 may be spaced apart from the gasket portion 235A. Although an embodiment of a connection element including the double-sided adhesive tape 265 is illustrated in FIG. 3, alternative embodiments of a connection component include, for example, adhesives and other similar connection components. In addition, although an embodiment of a tube connection component 230A including a single through hole 260A and a single gasket portion 235A is illustrated in FIG. 3, alternative embodiments include configurations wherein a tube connection component including a plurality of through holes and a plurality of gasket portions may be used.

Alternative embodiments include configurations where instead of the tube connection component 230A of FIG. 4, a tube connection component 230B of FIG. 5 may be fixed to the microfluidic device 110B. Referring to FIG. 5, the tube connection component 230B includes a body 255B fixed to the microfluidic device 110B (see FIG. 3), and a gasket portion 235B formed at a side of the body 255B that faces the microfluidic device 110B. The body 255B includes a through hole 260B formed in a thickness direction of the body 255B. The gasket portion 235B is formed around an inlet of the side of the through hole 260B that faces the microfluidic device 110B. In the present embodiment, the gasket portion 235B has an o-ring shape. The end 102 of the tube 101 is inserted into the through hole 260B. A sealant portion 160 sealing an inlet of the through hole 260A is formed by coating a sealant around the inlet of the through hole 260B so that fluids do not leak between the end 102 of the tube 101 and the through hole 260B. As discussed above, alternative sealing methods may be included as an alternative to the sealant 160.

The tube connection component 230B includes a gasket unit 232B and a tube receiving unit 240B, which are separately formed, similar to the tube connection component 230A of FIG. 4. The gasket unit 232B includes the gasket portion 235B and a first body portion 234B integrally formed as a single, unitary and indivisible component with the gasket portion 235B and including a first connection through hole 237B. The tube receiving unit 240B includes a second body portion 242B including a second connection through hole 247B.

The tube connection component 230B may be formed by linearly aligning the first connection through hole 237B and the second connection through hole 247B and then coupling the body portion 234B and the second body portion 242B to each other. In the present embodiment, the first connection through hole 237B is tapered in a frustum shape, e.g., a funnel shape. The first connection through hole 237B includes a first connection through hole inclined plane 238 whose cross-sectional diameter decreases towards the gasket portion 235B. In one embodiment, a first connection through hole inclination angle A4 between the first connection through hole inclined plane 238 and a normal line extending in a thickness direction of the body portion 234B may be in the range of about 4 degrees to about 55 degrees.

The tube receiving unit 240B includes a protrusion 244 that protrudes and tapers from the second body portion 242B so as to be accommodated in the first connection through hole 237B when the body portion 234B is fixed to the second body portion 242B. The protrusion 244 includes a protrusion inclined plane 245 whose cross-sectional diameter decreases away from the second body portion 242B. Embodiments of a protrusion inclination angle A3 between the protrusion inclined plane 245 and a normal line extending in a thickness direction of the second body portion 242B may be in the range of about 1 degree to about 45 degrees. When the second body portion 242B is not fixed to the body portion 234B, the protrusion inclination angle A3 is less than the first connection through hole inclination angle A4. Specifically, prior to insertion of the protrusion 244 into the first connection through hole 237B, the protrusion 244 may be slightly larger than the first connection through hole 237B.

The protrusion 244 is elastically deformed so that the protrusion inclination angle A3 is equal to the first connection through hole inclination angle A4 by aligning the protrusion 244 and the first connection through hole 237B with each other so that the protrusion 244 is accommodated in the first connection through hole 237B and then compressing the tube receiving unit 240B towards the gasket unit 232B. Thus, the first connection through hole inclined plane 238 is closely adhered to the protrusion inclined plane 245, thereby reliably preventing fluids from leaking. Embodiments include configurations wherein the body portion 234B and the second body portion 242B may be coupled using an adhesive (not shown).

In the present embodiment, the through hole 260B is formed by linearly aligning the first connection through hole 237B and the second connection through hole 247B. The body 255B is formed by coupling the body portion 234B and the second body portion 242B to each other. Embodiments include configurations wherein the body portion 234B and the gasket portion 235B may be integrally formed with each other as a single, unitary and indivisible component. In one embodiment, the gasket unit 232B and the tube receiving unit 240B may each be formed by molding a polymer resin and then may be combined with each other. Embodiments include configurations wherein the gasket unit 232B may be formed of a material including a silicone, PDMS, rubber or other material having similar characteristics. Embodiments include configurations wherein the tube receiving unit 240B may be formed of a material including PP, PC, PE, an acrylic resin or other materials having similar characteristics.

The tube connection component 230B may further include a connection element fixing the body 255B to the microfluidic device 110B similar to that described with respect to FIG. 3. The connection element has been described with reference to the tube connection component 230A of FIG. 4, and thus the description thereof is not repeated here.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A microfluidic system (100) comprising:
a microfluidic device (110A) comprising a fluid communication hole (120A);
a tube (101) connected in fluid communication with the fluid communication hole; and
a tube connection component (130) which connects an end (102) of the tube to the fluid communication hole,
wherein the fluid communication hole is tapered, and
wherein the tube connection component comprises:
a body (131) defining a through hole (133) in fluid communication with the end of the tube, wherein the body connects the tapered fluid communication hole of the microfluidic device to the end of the tube;
a sealant portion (160) which seals the end of the tube and the through hole;
a connection element (161, 162, 265) which fixes the body to the microfluidic device; and
a tapered protrusion (136) which protrudes from the body and is accommodated in the tapered fluid communication hole when the body is fixed to the microfluidic device,
wherein an inclination angle of the tapered protrusion is less than an inclination angle of the tapered fluid communication hole when the body is not fixed to the microfluidic device, and the tapered protrusion is elastically deformed so that the inclination angle of the tapered protrusion is equal to the inclination angle of the tapered fluid communication hole when the body is fixed to the microfluidic device;
and wherein the material of the tube connection component is selected from the group consisting of a silicone, polydimethylsiloxane, rubber and a combination thereof.

2. The microfluidic system of claim 1, wherein the inclination angle of the tapered protrusion preferably is in the range of about 1 degree to about 45 degrees and/or wherein the inclination angle of the tapered fluid communication hole preferably is in the range of about 4 degrees to about 55 degrees.

3. The microfluidic system of claim 1, wherein the microfluidlc device further comprises:
a bottom substrate (111);
a top substrate (113) disposed on the bottom substrate and defining a chamber (115) with the bottom substrate, wherein
the tapered fluid communication hole is disposed in the top substrate and in fluid communication with the chamber through the top substrate; and wherein
the body of the tube connection component is fixed to the top substrate of the microfluidic device, and
wherein the tube is entirely outside the chamber.

4. The microfluidic system of any one of claims 1 to 3, wherein the fluid communication hole of the microfluidic device is funnel shaped.

## Patentansprüche

1. Ein Mikrofluidsystem (100), das umfasst:
eine Mikrofluidvorrichtung (110A), die eine Flüssigkeitsübertragungsöffnung (120A) umfasst;
ein Röhrchen (101), das mit der Flüssigkeitsübertragungsöffnung in Flüssigkeitsaustausch verbunden ist; und
ein Röhrchenverbindungsteil (130), das ein Ende (102) des Röhrchens mit der Flüssigkeitsübertragungsöffnung verbindet, wobei die Flüssigkeitsübertragungsöffnung konisch zulaufend ist, und wobei das Röhrchenverbindungsteil umfasst:
einen Körper (131), der eine Durchlassöffnung (133) in Flüssigkeitsaustausch mit dem Ende des Röhrchens definiert, wobei der Körper die konisch zulaufende Flüssigkeitsübertragungsöffnung der Mikrofluidvorrichtung mit dem Ende des Röhrchens verbindet;
ein Abdichtungsbereich (160), der das Ende des Röhrchens und die Durchlassöffnung abdichtet;
ein Verbindungselement (161, 162, 265), das den Körper an der Mikrofluidvorrichtung befestigt; und
einen konisch zulaufenden Vorsprung (136), der aus dem Körper herausragt und in der konisch zulaufenden Flüssigkeitsübertragungsöffnung aufgenommen wird, wenn der Körper an der Mikrofluidvorrichtung befestigt wird,
wobei ein Neigungswinkel des konisch zulaufenden Vorsprungs kleiner als ein Neigungswinkel der konisch zulaufenden Flüssigkeitsübertragungsöffnung ist, wenn der Körper nicht an der Mikrofluidvorrichtung befestigt ist, und der konisch zulaufende Vorsprung elastisch verformt wird, so dass der Neigungswinkel des konisch zulaufenden Vorsprungs gleich dem Neigungswinkel der konisch zulaufenden Flüssigkeitsübertragungsöffnung ist, wenn der Körper an der Mikrofluidvorrichtung befestigt ist;
und wobei das Material des Röhrchenverbindungsteils aus der Gruppe, die aus Silikon, Polydimethylsiloxan, Gummi und einer Kombination davon besteht, gewählt wird.

2. Das Mikrofluidsystem nach Patentanspruch 1, wobei der Neigungswinkel des konisch zulaufenden Vorsprungs vorzugsweise in dem Bereich von ungefähr 1 Grad bis ungefähr 45 Grad ist und/oder wobei der Neigungswinkel der konisch zulaufenden Flüssigkeitsübertragungsöffnung vorzugsweise in dem Bereich von ungefähr 4 Grad bis ungefähr 55 Grad ist.

3. Das Mikrofluidsystem nach Patentanspruch 1, wobei die Mikrofluidvorrichtung des Weiteren umfasst:
ein Bodensubstrat (111);
ein Decksubstrat (113), das auf dem Bodensubstrat angeordnet ist und mit dem Bodensubstrat eine Kammer (115) definiert, wobei die konisch zulaufende Flüssigkeitsübertragungsöffnung in dem Decksubstrat angeordnet ist und durch das Decksubstrat mit der Kammer in Flüssigkeitsaustausch ist; und wobei
der Körper des Röhrchenverbindungsteils an das Decksubstrat der Mikrofluidvorrichtung befestigt wird, und wobei das Röhrchen ganz außerhalb der Kammer ist.

4. Das Mikrofluidsystem nach einem der Patentansprüche 1 bis 3, wobei die Flüssigkeitsübertragungsöffnung der Mikrofluidvorrichtung trichterförmig ist.

## Revendications

1. Système microfluidique (100) comprenant :
un dispositif microfluidique (110A) comprenant un trou de communication de fluide (120A) ;
un tube (101) raccordé en communication fluide avec le trou de communication de fluide ; et
un composant de raccordement de tube (130) qui raccorde une extrémité (102) du tube au trou de communication de fluide,
dans lequel le trou de communication de fluide est conique, et
dans lequel le composant de raccordement de tube comprend :
un corps (131) définissant un trou traversant (133) en communication fluide avec l'extrémité du tube, dans lequel le corps raccorde le trou de communication de fluide conique du dispositif microfluidique à l'extrémité du tube ;
une partie d'étanchéité (160) qui étanchéifie l'extrémité du tube et le trou traversant ;
un élément de raccordement (161, 162, 265) qui fixe le corps au dispositif microfluidique ; et
une protubérance conique (136) qui fait saillie depuis le corps et est reçue dans le trou de communication de fluide conique lorsque le corps est fixé au dispositif microfluidique,
dans lequel l'angle d'inclinaison de la protubérance conique est inférieur à l'angle d'inclinaison du trou de communication de fluide conique lorsque le corps n'est pas fixé au dispositif microfluidique, et la protubérance conique est déformée de manière élastique de telle sorte que l'angle d'inclinaison de la protubérance conique soit égal à l'angle d'inclinaison du trou de communication de fluide conique lorsque le corps est fixé au dispositif microfluidique ;
et dans lequel le matériau du composant de raccordement de tube est choisi dans le groupe constitué de silicone, polydiméthylsiloxane, caoutchouc et une combinaison de ceux-ci.

2. Système microfluidique selon la revendication 1, dans lequel l'angle d'inclinaison de la protubérance conique se situe de préférence dans la plage allant d'environ 1 degré à environ 45 degrés et/ou dans lequel l'angle d'inclinaison du trou de communication de fluide conique se situe de préférence dans la plage allant d'environ 4 degrés à environ 55 degrés.

3. Système microfluidique selon la revendication 1, dans lequel le dispositif microfluidique comprend en outre :
un substrat inférieur (111) ;
un substrat supérieur (113) disposé sur le substrat inférieur et définissant une chambre (115) avec le substrat inférieur, dans lequel
le trou de communication de fluide conique est disposé dans le substrat supérieur et en communication fluide avec la chambre par l'intermédiaire du substrat supérieur ; et dans lequel
le corps du composant de raccordement de tube est fixé au substrat supérieur du dispositif microfluidique, et
dans lequel le tube est situé entièrement à l'extérieur de la chambre.

4. Système microfluidique selon l'une quelconque des revendications 1 à 3, dans lequel le trou de communication de fluide du dispositif microfluidique se présente sous la forme d'un entonnoir.
